# EUROPEAN PATENT APPLICATION

(11) **EP 2 784 765 A1**
(43) Date of publication of application: **01.10.2014**
(21) Application number: 13831997.5
(22) Date of filing: 04.07.2013
(51) Int. Cl.: G09B 5/06, G06F 1/16, G06F 3/14

(54) **ELECTRONIC SCHOOL BAG WITH DOUBLE DISPLAY TOUCH SCREENS AND DOUBLE CPUS**

(30) Priority: 03.09.2012 CN 201220445879 U
(71) Applicant: Huang, Roman, Shanghai 200335 (CN); Chiou, Harris, Shanghai 200335 (CN)
(72) Inventor: The designation of the inventor has not yet been filed
(74) Representative: Szabo, Zsolt
(86) International application number: PCT/CN2013/078808
(87) International publication number: WO 2014/032478

(57) **Abstract**

The present invention discloses a dual-display/dual-touch screen/dual-core CPU electronic schoolbag including central processors, display modules, two displays communicated with the central processors via the display modules, and an I/O interface and a storage respectively communicated with the central processors. The number of both of the displays modules and the central processors is two. Each display communicates with one of the central processors via one of the display modules. The two central processors directly communicate with each other. The two displays are an electronic paper and a liquid display, respectively. An electronic schoolbag capable of supporting multimedia and rapidly and effectively acquiring resources from external networks or servers is fulfilled by using a soft enhancing method on the network structure according to the present invention and possesses characteristics of strong interaction and rapid/effective acquisition of resources.

## Description

### FIELD OF THE INVENTION

The present invention relates to an electronic schoolbag and, more particularly, to a dual-display/dual-touch screen/dual-core CPU electronic schoolbag.

### BACKGROUND OF THE INVENTION

Current schoolbags generally use tablet computers or notebooks having a single liquid display which has a larger effect on the eyesight after long-term reading or use electronic books having a single Eink electronic paper. However, the electronic paper technique is generally a blank-and-white display and can not support the functions of multimedia and rich-media. Furthermore, schoolbags with a single screen can not simultaneously fulfill the interaction and association of the teaching materials of schoolbags and extracurricular resources. Furthermore, current schoolbags lack functional connection for rapidly and effectively acquiring resources from external networks or servers, causing limitations to schoolbags in acquiring resources.

### SUMMARY OF THE INVENTION

An objective of the present invention is to overcome the disadvantages of the current techniques by providing a dual-display/dual-touch screen/dual-core CPU electronic schoolbag including two displays having an electronic paper causing less harm to eyes to support long-term reading and a liquid display for displaying multimedia. Furthermore, the functions of the electronic schoolbag can rapidly and effectively acquiring resources from external networks or servers, possessing characteristics of strong interaction and rapid/effective acquisition of resources.

The technical solution to fulfill the above objectives is a dual-display/dual-touch screen/dual-core CPU electronic schoolbag according to the present invention including central processors, display modules, two displays communicated with the central processors via the display modules, and an I/O interface and a storage respectively communicated with the central processors. The number of both of the displays modules and the central processors is two. Each display communicates with one of the central processors via one of the display modules. The two central processors directly communicate with each other. The two displays are an electronic paper and a liquid display, respectively.

The electronic paper is an Eink electronic pulse display (EPD). The liquid display is a thin film transistor (TFT) display or an organic light-emitting diode (OLED).

Two touch screens are also included. The touch screens are respectively fixed to a surface of the electronic paper and a surface of the liquid display and respectively communicate with the central processors.

A network device communicated with the two central processors is also included. The network device communicates with an external cloud server.

The network device communicates with an internal local network server and communicates with the external cloud server via the internal local network server.

An audio communication module is also included. The audio communication module communicates with the two central processors.

A camera is also included. The camera communicates with the two central processors.

A voice over internet protocol (VOIP) module is also included. The voice over internet protocol module communicates with the two central processors.

By using the above technical solutions, the present invention provides the following advantageous effects.

Use of the two central processors directly communicated with each other prevents potential conflict in display of different displays in different processing, allowing smooth operation of the electronic schoolbag and smooth display of the displays. Use of the electronic paper and the liquid display at the same time allows a user to browse and read content-related multimedia files while proceeding with regular eyesight-protecting reading by using the electronic paper. This allows the user to understand the information being read from different aspects and helps the user to more comprehend the content being read. Use of the touch screens allows the user to more rapidly operate the schoolbag by directly touching the schoolbag and performing the functions the schoolbag. Furthermore, recording on a notebook or direct amendment to the content being read can be achieved by directly writing on the surface of the touch screens, increasing the interaction between the schoolbag and the user. Use of the network device allows the user to rapidly and effectively acquire resources from external networks or servers.

### BRIEF DESCRIPTION OF THE DRAWINGS

FIG. 1 is a structure block diagram of a dual-display/dual-touch screen/dual-core CPU electronic schoolbag according to the present invention.
FIG. 2 is a schematic outer structural view of the dual-display/dual-touch screen/dual-core CPU electronic schoolbag according to the present invention.

### DETAILED DESCRIPTION OF THE INVENTION

The present invention will be further described in connection with the illustrative embodiments.

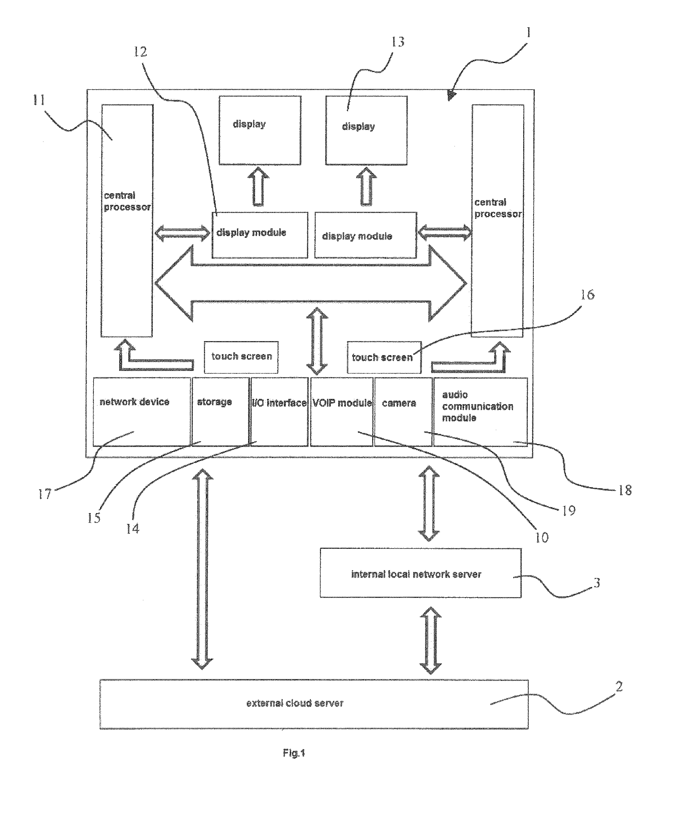

With reference to FIG. 1, a dual-display/dual-touch screen/dual-core CPU electronic schoolbag 1 according to the present invention includes central processors 11, display modules 12, two displays 13 communicated with the central processors 11 via the display modules 12, and an I/O interface 14 and a storage 15 respectively communicated with the central processors 11. The number of both of the displays modules 12 and the central processors 11 is two. Each display 13 communicates with one of the central processors 11 via one of the display modules 12. The two central processors 11 directly communicate with each other. Use of two displays 13 is supported by using two display modules 12. Use of the two central processors 11 directly communicated with each other prevents potential conflict in display of different displays 13 in different processing, allowing smooth operation of the electronic schoolbag and smooth display of the displays 13.

Furthermore, a network device 17 communicated with the two central processors 11 is also included. The network device 17 directly communicates with an external cloud server 2 by wire or wireless connection or communicates with an internal local network server 3 and then communicates with the external cloud server 2 via the internal local network server 3. Use of the network device 17 allows the user to rapidly and effectively acquire resources from external networks or servers, enlarging the resource range acquirable by the user and increasing the reading convenience of the user.

Furthermore, an audio communication module 18, a camera 19, and a voice over internet protocol (VOIP) module 10 communicated with the central processors 11 are also included, fulfilling functional versatility of the electronic schoolbag.

The central processors 11 communicate with the network device 17, the storage 15, the I/O interface 14, the voice over internet protocol module 10, the camera 19, and the audio communication module 18 by wire or wireless connection.

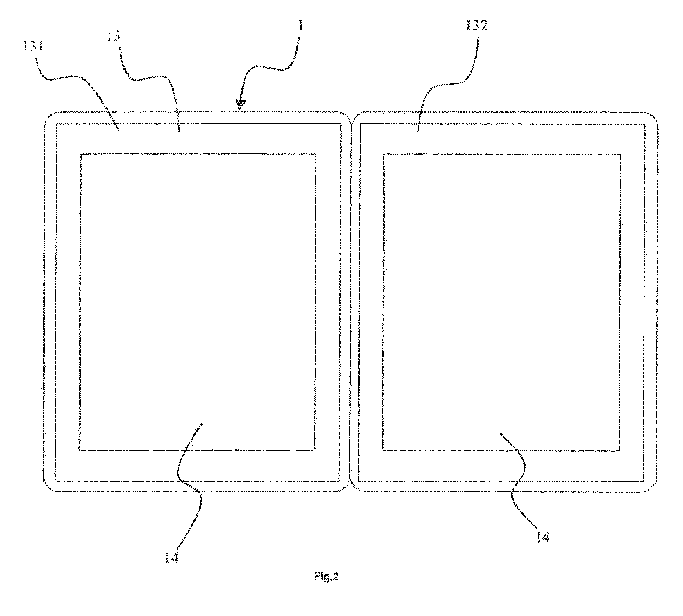

With reference to FIG. 2, the two displays 13 are an electronic paper 131 and a liquid display 132, respectively. The electronic paper 131 is an Eink electronic pulse display (EPD). The liquid display 132 is a thin film transistor (TFT) display or an organic light-emitting diode (OLED). Use of the electronic paper 131 and the liquid display 132 at the same time allows a user to browse and read content-related multimedia files while proceeding with regular eyesight-protecting reading by using the electronic paper 131. This allows the user to understand the information being read from different aspects and helps the user to more comprehend the content being read.

Two touch screens 16 are also included. The touch screens 16 are respectively fixed to a surface of the electronic paper 131 and a surface of the liquid display 132 and respectively communicate with the central processors 11. Use of the touch screens 14 allows the user to more rapidly operate the schoolbag by directly touching the schoolbag and performing the functions the schoolbag. Furthermore, recording on a notebook or direct amendment to the content being read can be achieved by directly writing on the surface of the touch screens 14, increasing the interaction between the schoolbag and the user.

Although the invention has been described in connection with the embodiment shown in the accompanying drawings, a person having ordinary skill in the art can make various modifications to the invention based on the above descriptions. Therefore, some details of the embodiment should not be construed to restrict the invention. The scope of the invention is limited by the accompanying claims.

## Claims

1. A dual-display/dual-touch screen/dual-core CPU electronic schoolbag comprising central processors, display modules, two displays communicated with the central processors via the display modules, and an I/O interface and a storage respectively communicated with the central processors, **characterized in that**: a number of both of the displays modules and the central processors is two, each display communicates with one of the central processors via one of the display modules, the two central processors directly communicate with each other, and the two displays are an electronic paper and a liquid display, respectively.

2. The dual-display/dual-touch screen/dual-core CPU electronic schoolbag according to claim 1, **characterized in that**: the electronic paper is an Eink electronic pulse display (EPD), and the liquid display is a thin film transistor (TFT) display or an organic light-emitting diode (OLED).

3. The dual-display/dual-touch screen/dual-core CPU electronic schoolbag according to claim 1 or 2, **characterized in** further comprising: two touch screens, with the two touch screens respectively fixed to a surface of the electronic paper and a surface of the liquid display and respectively communicated with the central processors.

4. The dual-display/dual-touch screen/dual-core CPU electronic schoolbag according to claim 3, **characterized in** further comprising: a network device communicated with the two central processors, with the network device communicated with an external cloud server.

5. The dual-display/dual-touch screen/dual-core CPU electronic schoolbag according to claim 4, **characterized in that**: the network device communicates with an internal local network server and communicates with the external cloud server via the internal local network server.

6. The dual-display/dual-touch screen/dual-core CPU electronic schoolbag according to claim 5, **characterized in** further comprising: an audio communication module, with the audio communication module communicated with the two central processors.

7. The dual-display/dual-touch screen/dual-core CPU electronic schoolbag according to claim 6, **characterized in** further comprising: a camera, with the camera communicated with the two central processors.

8. The dual-display/dual-touch screen/dual-core CPU electronic schoolbag according to claim 7, **characterized in** further comprising: a voice over internet protocol (VOIP) module, with the voice over internet protocol module communicated with the two central processors.
